# DEMANDE DE BREVET EUROPEEN

(11) **EP 1 039 754 A1**
(43) Date de publication de la demande: **27.09.2000**
(21) Numéro de dépôt: 00400711.8
(22) Date de dépôt: 15.03.2000
(51) Int. Cl.: H04N 7/18, G06F 17/60

(54) **Système pour l'estimation à distance du coût de travaux**

(30) Priorité: 16.03.1999 FR 9903203
(71) Demandeur: Seive, Franck, 92200 Neuilly sur Seine (FR)
(72) Inventeur: Seive, Franck, 92200 Neuilly sur Seine (FR)
(74) Mandataire: Bonnetat, Christian

(57) **Abrégé**

- La présente invention concerne un système permettant, à partir d'un poste fixe (1), d'établir une estimation du coût de travaux à réaliser sur des objets disposés en des lieux distincts dudit poste fixe.
- Selon l'invention, ce système comporte :
   . au moins un véhicule (2), apte à se rendre sur lesdits lieux et équipé de moyens d'émission de données numériques ;
   . des moyens de prise de vue, aptes à délivrer des données numériques d'images représentatives desdits objets et à être connectés auxdits moyens d'émission ;
   . des moyens de réception de données numériques, aptes à recevoir les données numériques d'images émises par lesdits moyens d'émission ; et
   . des moyens d'estimation de coût, disposés audit poste fixe (1) et connectés auxdits moyens de réception, aptes à établir ladite estimation de coût à partir des données numériques d'images reçues par lesdits moyens de réception de données numériques.

## Description

La présente invention concerne un système permettant, à partir d'un poste fixe, d'établir une estimation du coût de travaux à réaliser sur des objets disposés en des lieux distincts dudit poste fixe.

On comprendra aisément que la présente invention peut être mise en oeuvre dans de nombreuses applications, telles que restauration de bâtiments, de routes, d'ouvrages d'art, etc ... Cependant, elle est tout particulièrement appropriée à être utilisée pour l'établissement de devis de réparations de véhicules automobiles accidentés. Aussi, quoique non exclusivement destinée à cette dernière application, la présente invention sera plus particulièrement décrite ci-après en rapport avec elle.

Il est d'usage courant qu'une compagnie d'assurance, avant de prendre en charge les frais de remise en état d'un véhicule accidenté qu'elle assure, exige que ce véhicule accidenté soit soumis à l'examen d'un expert, qui établit une estimation du coût des travaux à effectuer. A cette fin, le propriétaire du véhicule accidenté doit confier celui-ci à un garage, dans lequel l'expert se rendra sur rendez-vous. Cette procédure d'expertise présente de nombreux inconvénients. Tout d'abord, le véhicule peut être immobilisé inutilement plusieurs jours --sans pouvoir être utilisé par son propriétaire, qui doit trouver une solution de remplacement, telle que la coûteuse location d'un véhicule de louage-- même dans le cas où les dégâts étant purement superficiels (carrosserie) et sans gravité, le véhicule pourrait circuler en toute sécurité. Ensuite, une procédure d'expertise aussi pénalisante pour le propriétaire du véhicule peut se révéler inutile pour lui, puisque le montant des réparations à effectuer peut être inférieur au montant de la franchise non remboursée par la compagnie d'assurance.

Par ailleurs, de telles expertises sont coûteuses pour les compagnies d'assurance, puisque celles-ci doivent avoir recours à de nombreux experts, bien rémunérés en tant que tels, dont le temps de travail incorpore par nécessité les nombreux temps de déplacement --improductifs-- de garage en garage.

Aussi, ces procédures d'expertise usuelles ne se justifient réellement que pour les véhicules gravement endommagés.

La présente invention a pour objet de remédier aux inconvénients rappelés ci-dessus, et elle concerne un système permettant, d'une part, d'éviter l'immobilisation pour expertise d'un véhicule accidenté et, d'autre part, d'abaisser considérablement le coût d'une expertise, notamment dans le cas où seule la carrosserie d'un véhicule est endommagée.

A cette fin, selon l'invention, le système permettant, à partir d'un poste fixe, d'établir une estimation du coût de travaux à réaliser sur des objets disposés en des lieux distincts dudit poste fixe, est remarquable en ce qu'il comporte :
- au moins un véhicule, apte à se rendre sur lesdits lieux ;
- des moyens d'émission de données numériques, portés par ledit véhicule ;
- des moyens de prise de vue, aptes à délivrer des données numériques d'images représentatives desdits objets et à être connectés auxdits moyens d'émission du véhicule ;
- des moyens de réception de données numériques, aptes à recevoir les données numériques d'images émises par lesdits moyens d'émission ; et
- des moyens d'estimation de coût, disposés audit poste fixe et connectés auxdits moyens de réception, aptes à établir ladite estimation de coût à partir des données numériques d'images reçues par lesdits moyens de réception de données numériques.

On voit ainsi que, grâce audit véhicule, un opérateur peut se rendre au domicile du propriétaire du véhicule accidenté --ou en tout autre lieu convenu avec lui-- pour prendre des clichés de ce véhicule, à l'aide d'un appareil de photographie numérique ou d'une caméra numérique, clichés qui sont adressés sous forme numérique audit poste fixe par l'intermédiaire desdits moyens d'émission et desdits moyens de réception.

Dans un mode de réalisation simplifié du système conforme à la présente invention, lesdits moyens d'estimation de coût peuvent comporter des moyens de reconstitution d'images, connectés auxdits moyens de réception et aptes à reconstituer des images à partir de données numériques d'images. Ainsi, un expert observant lesdits moyens de reconstitution d'images peut juger de l'état du véhicule et établir une estimation des coûts de remise en état.

On voit donc qu'avec le système conforme à la présente invention, l'opérateur prenant les clichés peut avoir une qualification moindre que celle d'un expert et que l'expert ne perd plus de temps en déplacements d'un garage à un autre. De plus, le véhicule accidenté n'est plus immobilisé dans un garage dans l'attente du passage d'un expert.

Dans une variante de réalisation entièrement automatisée, lesdits moyens d'estimation de coût comportent un système expert associé à une base de données d'accidents. Il est bien évident que, dans ce mode de réalisation, le coût d'établissement des devis de réparations peut être optimisé. Une telle base de données peut par exemple être établie à partir de données d'estimation de coûts réalisées par des experts utilisant le mode de réalisation simplifié du système conforme à l'invention, mentionné ci-dessus.

Par ailleurs, notamment dans le cas où le système conforme à la présente invention est spécialement destiné à l'estimation du coût de travaux de remise en état de carrosseries endommagées par des enfoncements et/ou des éraflures, il est avantageux que lesdites informations numériques transmises par le véhicule au poste fixe comprennent des informations représentatives de la surface et de la profondeur de ces enfoncements et éraflures.

Ces informations numériques, complétant les informations d'images transmises au poste fixe, peuvent être transmises auxdits moyens d'émission par l'intermédiaire de moyens d'entrée supplémentaires des données numériques.

Pour que l'estimation du coût des travaux à réaliser puisse faire l'objet d'un devis disponible dans ledit véhicule, il est avantageux que le système conforme à la présente invention comporte de plus :
- des moyens d'émission disposés audit poste fixe et aptes à émettre des informations numériques de coût de travaux ;
- des moyens de réception équipant ledit véhicule et aptes à recevoir les informations numériques émises par lesdits moyens d'émission ; et
- des moyens d'impression desdites informations numériques de coût de travaux reçues par lesdits moyens de réception, prévus dans ledit véhicule.

Ainsi, ledit système peut travailler, sinon en temps réel, du moins en temps très peu retardé.

Bien entendu, le système conforme à la présente invention peut comporter une pluralité de véhicules aptes à se rendre simultanément dans une pluralité de lieux différents distincts dudit poste fixe et distincts entre eux. Dans ce cas, il est avantageux que le système comporte une mémoire apte à stocker, sous forme de dossiers, les informations numériques relatives à un véhicule accidenté, reçues par les moyens de réception associés au poste fixe et émises par lesdites pluralités de véhicules. Ainsi, les moyens d'estimation de coûts peuvent saisir successivement les dossiers relatifs à des véhicules différents.

Par ailleurs, le système peut comporter une mémoire supplémentaire à fichiers validables, dans laquelle chaque dossier d'estimation est stocké sous forme d'un fichier. Ainsi, il est possible de ne garder dans cette mémoire que les fichiers validés correspondant à des acceptations de travaux par le client. Une telle mémoire à fichiers constitue donc une base de travaux à effectuer pouvant être incorporée à un serveur disposé dans un réseau de communication, tel qu'Internet, de façon à pouvoir être interrogée par des réparateurs à la recherche de travaux de remise en état de véhicules. Ces réparateurs peuvent donc se charger de ces travaux en fonction de leur disponibilité.

Les figures du dessin annexé feront bien comprendre comment l'invention peut être réalisée. Sur ces figures, des références identiques désignent des éléments semblables.

La figure 1 est une vue schématique illustrant le système conforme à la présente invention.

Les figures 2 et 3 montrent, en schémas synoptiques, deux modes de réalisation du système conforme à la présente invention.

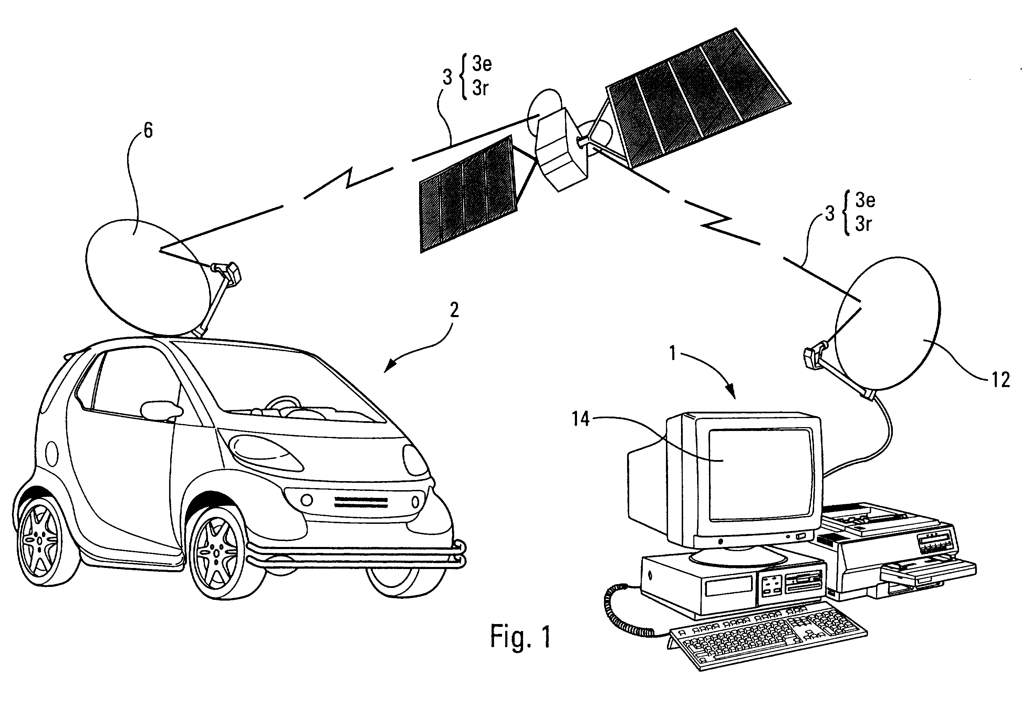

Le système, conforme à la présente invention et représenté schématiquement sur les figures 1 à 3, comporte un poste fixe 1, à partir duquel on désire établir une estimation du coût de travaux à réaliser sur des objets (non représentés), par exemple des automobiles dont la carrosserie est endommagée, disposés en des lieux distincts, par exemple éloignés de plusieurs kilomètres, du poste fixe 1. Pour cela, ledit système comporte une pluralité de véhicules 2, dont un seul est représenté sur les figures, aptes à se rendre sur les lieux où se trouvent lesdits objets sur lesquels doivent être effectués des travaux.

Comme on peut le voir sur les figures, chaque véhicule 2 est relié au poste fixe 1 par une liaison 3, par exemple du type liaison GSM, apte à transmettre des informations numériques.

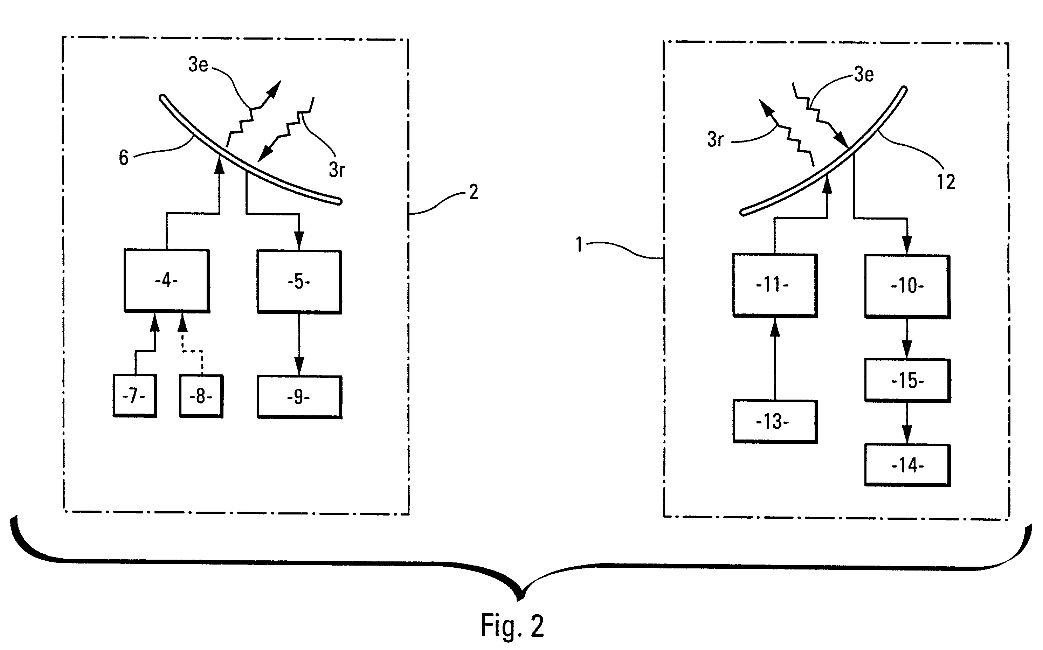

Dans l'exemple de réalisation montré par la figure 2, chaque véhicule 2 comporte un émetteur numérique 4 et un récepteur numérique 5, couplés à une antenne parabolique 6, porté par ledit véhicule. L'émetteur numérique 4 et le récepteur numérique 5 peuvent respectivement émettre et recevoir sur les voies d'émission et de réception 3e et 3r de la liaison 3. A l'émetteur numérique 4 est couplé un moyen d'entrée de données numériques 7, par exemple à clavier, alors qu'un appareil de prise de vue numérique 8 est reliable de façon amovible audit émetteur 4. Au récepteur numérique 5 est connectée une imprimante 9.

Quant à lui, le poste fixe 1 illustré sur la figure 2, comporte un récepteur numérique 10 et un émetteur numérique 11, couplés à une antenne parabolique 12, reliée à l'antenne parabolique 6 par les voies 3e et 3r de la liaison 3. A l'émetteur 11 est couplé un moyen d'entrée de données numériques 13, par exemple à clavier. Le récepteur numérique 10 est relié à un appareil d'affichage à écran 14, par l'intermédiaire d'une mémoire 15.

On conçoit aisément que grâce au système de la figure 2, un opérateur, ayant amené le véhicule 2 en un lieu où il peut observer un véhicule endommagé, peut prendre des images de celui-ci grâce à l'appareil de prise de vues numériques 8, alors débranché de l'émetteur numérique 4. Après cette prise de vues, l'opérateur branche l'appareil de prise de vues 8 sur l'émetteur numérique 4 et adresse, par la voie d'émission 3e, ces images numériques au poste fixe 1, qui les reçoit par le récepteur 10 et les stocke dans la mémoire 15. En parallèle, cet opérateur, grâce aux moyens d'entrée 7, peut adresser des informations complémentaires au récepteur numérique 10 et à la mémoire 15. Ainsi, dans cette dernière mémoire, sont emmagasinées des informations numériques constituant un dossier de réparation correspondant audit véhicule endommagé.

Par suite, un expert examinant l'appareil d'affichage à écran 14 peut consulter l'un après l'autre les dossiers stockés dans la mémoire 15, adressés par les différents véhicules 2 et correspondant chacun à un véhicule accidenté. Lorsqu'il a fini l'estimation d'un dossier, l'expert peut l'adresser au récepteur numérique 5 de la figure 2 concerné par l'intermédiaire du moyen d'entrée numérique 13 et de l'émetteur 11. Le récepteur numérique 5 transmet alors ces informations à l'imprimante 9 apte à fournir un devis imprimé correspondant au ou à l'un des véhicules endommagés photographiés par chaque véhicule 2.

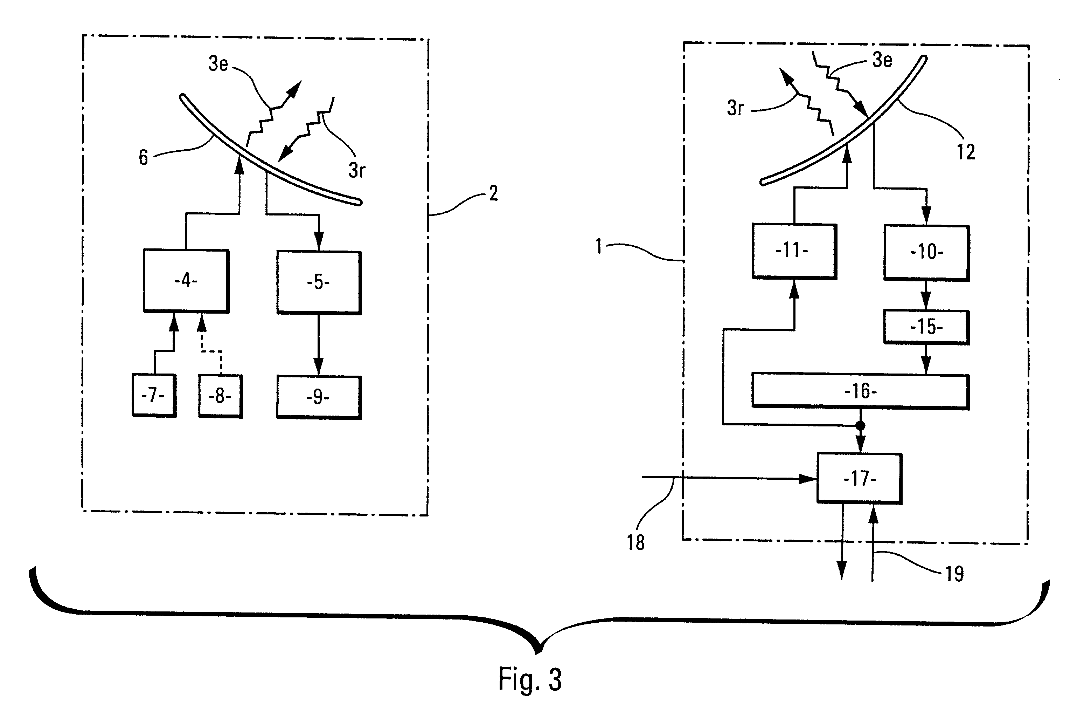

Dans le mode de réalisation de la figure 3, on retrouve des véhicules 2 semblables au véhicule 2 de la figure 2.

Dans ce mode de réalisation, le poste fixe 1 diffère de celui de la figure 2 en ce que les moyens de reconstitution d'images 14 et les moyens d'entrée de données numériques 13 sont supprimés et remplacés par un système expert 16 pourvu d'une base de données de devis antérieurs et apte à estimer le coût des réparations, en fonction des informations qu'il reçoit du récepteur 10, à travers la mémoire 15.

Par ailleurs, le système expert 16 alimente une mémoire 17 à fichiers validables pouvant être interrogée à distance. Par l'entrée de validation 18, on peut valider les devis de réparation ayant fait l'objet de l'accord des propriétaires concernés et effacer les devis sans suite. La mémoire 17 est avantageusement incorporée à un serveur, disposé dans un réseau de communication du type Internet et interrogeable par les liaisons 19.

Il va de soi que, dans le système conforme à la présente invention, le véhicule 2 à quatre roues représenté sur la figure 1 pourrait être remplacé par tout autre véhicule, par exemple une motocyclette ou analogue, apte à porter les éléments 4 à 9.

## Revendications

1. Système d'estimation du coût de travaux à réaliser sur un objet, comportant :
- des moyens de prise de vue (8), actionnés par un opérateur et aptes à délivrer des données numériques d'images représentatives dudit objet ;
- des moyens (4, 6) d'émission de données numériques, aptes à transmettre lesdites données numériques d'images représentatives dudit objet ; et
- des moyens (10) de réception de données numériques, disposés à un poste fixe (1) distinct du lieu où se trouve ledit objet et aptes à recevoir les données numériques d'images transmises par lesdits moyens d'émission (4, 6),
caractérisé :
- en ce qu'il comporte :
. au moins un véhicule (2), apte à transporter ledit opérateur sur une pluralité de tels lieux distincts comportant chacun au moins un tel objet ; et
. des moyens (14, 16) d'estimation du coût des travaux à réaliser sur lesdits objets, disposés audit poste fixe (1) et connectés auxdits moyens de réception (10), aptes à établir ladite estimation de coût à partir des données numériques d'images reçues par lesdits moyens de réception (10) ;
- en ce que lesdits moyens de prise de vue (8) sont transportés par ledit véhicule (2) ; et
- en ce que lesdits moyens d'émission (4, 6) sont portés par ledit véhicule (2).

2. Système selon la revendication 1,
caractérisé en ce que lesdits moyens d'estimation de coût comportent des moyens de reconstitution d'images (14), connectés auxdits moyens de réception associés au poste fixe (10) et aptes à reconstituer des images à partir de données numériques d'images.

3. Système selon la revendication 1,
caractérisé en ce que lesdits moyens d'estimation de coût comportent un système expert (16).

4. Système selon l'une des revendications 1 à 3, spécialement destiné à l'estimation du coût de travaux de remise en état d'éléments de carrosserie endommagés par des enfoncements et/ou des éraflures,
caractérisé en ce que les informations numériques transmises par le véhicule audit poste fixe comprennent des informations représentatives de la surface et de la profondeur desdits enfoncements et éraflures.

5. Système selon l'une des revendications 1 à 4,
caractérisé en ce qu'il comporte de plus :
- des moyens d'émission (11), disposés audit poste fixe (1) et aptes à émettre des informations numériques de coût de travaux ;
- des moyens de réception (5), équipant ledit véhicule (2) et aptes à recevoir les informations numériques émises par lesdits moyens d'émission (11); et
- des moyens (9) d'impression desdites informations numériques de coût de travaux reçues par lesdits moyens de réception (5), portés par ledit véhicule (2).

6. Système selon l'une des revendications 1 à 5,
caractérisé en ce qu'il comporte une mémoire (15) apte à stocker les données numériques d'image reçues par les moyens de réception (10) du poste fixe (1).

7. Système selon l'une des revendications 1 à 6,
caractérisé en ce qu'il comporte une mémoire (17) à fichiers validables, dans laquelle chaque dossier d'estimation est stocké sous forme d'un fichier.

8. Système selon la revendication 7,
caractérisé en ce que ladite mémoire (17) est incorporée à un serveur disposé dans un réseau de communication.
